# EUROPEAN PATENT SPECIFICATION

(11) **EP 2 614 718 B1**
(45) Date of publication and mention of the grant of the patent: **10.01.2018**
(21) Application number: 13162923.0
(22) Date of filing: 04.09.2007
(51) Int. Cl.: A23C 19/032, A23C 9/12, A23C 9/158, A23C 19/06, A23C 19/068, A23C 19/072

(54) **Use of yeast and bacteria for making dairy products with improved flavour and/or texture quality characteristics**
Verwendung von Hefe und Bakterien zur Herstellung von Milchprodukten mit verbesserten Geschmacks- und/oder Texturqualitätseigenschaften
Utilisation de la levure et de bactéries pour la fabrication de produits laitiers possédant un goût amélioré et/ou des caractéristiques de qualité de texture

(30) Priority: 08.09.2006 EP 06120382
(43) Date of publication of application: 17.07.2013
(62) Divisional of application: 07808513.1
(73) Proprietor: CSK Food Enrichment B.V., 8938 AS Leeuwarden (NL)
(72) Inventor: Brandsma, Johannes Bernhard, 8921 Ad Leeuwarden (NL); Meijer, Willem Cornelis, 6712 HA Ede (NL)
(74) Representative: Nederlandsch Octrooibureau

(56) References cited:
- WO-A1-2004/041305
- US-A1- 2003 138 523
- DATABASE FSTA [Online] INTERNATIONAL FOOD INFORMATION SERVICE (IFIS), FRANkFURT-MAIN, DE; 1996, ABD-EL-GHANI S ET AL: "Effects of Propionibacterium freudenreichii subsp. shermanii on the growth and viability of yeasts in yoghurt like products.", XP002412259, Database accession no. 97-1-07-p0158 & EGYPTIAN JOURNAL OF DAIRY SCIENCE 1996 DEP. OF FOOD TECH. & DAIRYING,, vol. 24, no. 2, 1996, page 247, DOKKI, CAIRO, EGYPT
- DAS S ET AL: "Effect of yeast and bacterial adjuncts on the CLA content and flavour of a washed-curd, dry-salted cheese", INTERNATIONAL DAIRY JOURNAL, ELSEVIER APPLIED SCIENCE, BARKING,, GB, vol. 15, no. 6-9, June 2005 (2005-06), pages 807-815, XP004978605, ISSN: 0958-6946
- MARTIN N ET AL: "FLAVOR GENERATION IN CHEESE CURD BY COCULTURING WITH SELECTED YEAST, MOLD AND BACTERIA", JOURNAL OF DAIRY SCIENCE, AMERICAN DAIRY SCIENCE ASSOCIATION, SAVOY, IL, US, vol. 82, no. 6, June 1999 (1999-06), pages 1072-1080, XP000831306, ISSN: 0022-0302
- EFFAT B A ET AL: "Comparison of antifungal activity of metabolites from Lactobacillusrhamnosus, Pediococcusacidilactici and Propionibacteriumthoenii", EGYPTIAN JOURNAL OF DAIRY SCIENCE, EGYPTIAN SOCIETY OF DAIRY SCIENCE, CAIRO, EG, vol. 29, no. 2, 2001, pages 251-262, XP009164885, ISSN: 0378-2700

## Description

### FIELD OF THE INVENTION

The present invention relates to the field of dairy production. Provided are methods for making fermented dairy products such as cheeses or cheese-derived products, like quarks, wherein mixtures of live, food-grade micro-organisms are used, especially a yeast strain, which is responsible for flavour formation, and at least one bacterial strain which is capable of controlling, especially reducing, the growth (or growth rate) of said yeast strain in such a way that flavour and/or texture quality characteristics are optimized. Also dairy products obtainable by using such micro-organisms are provided, as well as adjunct- or starter-cultures (in fresh, deep frozen or freeze dried formulation) or mixtures of adjunct cultures and starter cultures comprising such micro-organisms.

### BACKGROUND OF THE INVENTION

Cheese production involves the clotting ("curdling") and acidification of milk to produce curd, by adding rennet, fermented produced chymosin (FPC) or coagulants from other sources (e.g. fungal) and starter cultures to the milk, respectively. The curd is then processed, for example by pressing to remove excess liquid (whey), before the ripening process is started during which the flavours and texture properties develop. Micro-organisms other then lactic acid bacteria (LAB) are also used in cheese production, such as Emmentaler, smear cheeses and soft cheeses. An example hereof is the production of Blue-veined cheeses like Roquefort and Danablu with yeasts and fungi. The yeasts are assumed to assist the development of fungi by gas production,, leading to curd openness in which the fungus is then able to grow. Both the yeast and the fungus are responsible for the flavour production of the soft cheese (Coghill, D. (1979). The Australian Journal of Dairy Technology, 34, 72-75; Fox, P.F. & Law,. J. (1991). Food Biotechnology, 5, 239-262.).

Up to now the use of fast CO₂ producing yeasts in semi-hard and hard cheeses is not feasible because it leads during ripening (especially during stages when the cheese texture becomes less flexible) to unwanted textural defects, such as crack formation, irregular eye formation and/or irregular eye distribution. In addition, some micro-organisms cannot be used because their uncontrolled growth may result in a too high lipolytic activity, whereby "off-flavours" and/or "off-odors" are produced. The product is then said to be "rancid" and/or "soapy". Such rancidity and/or soapy taste is a result of the micro-organism producing too much lipase activity, whereby short chain fatty acids such as butyric acid are produced. Lipolysis and excessive lipolytic activity can be measured by determining the presence of free fatty acids.

Therefore, use of food grade micro-organisms for flavour development and/or flavour diversity in semi-hard and hard cheeses is currently restricted to strains which do not give undesirable side effects, such as undesirable textural characteristics (cracking, irregular eye formation and/or irregular eye distribution) and/or undesirable flavour/odor characteristics. The use of yeast species and other CO₂ producing micro-organisms, which are capable of producing interesting flavours, is therefore limited by the negative side effects of (i) excessive gas (CO₂) production which results in e.g. crack formation and therefore undesired textural properties and/or (ii) excessive lipolytic activity (Jakobsen, M. & Narvhus, J. (1996). International Dairy Journal, 6, 755-768). It is, therefore, desirable to provide methods for controlling the growth of such micro-organisms and the present invention provides methods and means for doing so.

Lourens-Hattingh and Viljoen (Food Microbiology 2002, 19: 597-604) found that the only solution to excessive gas formation in yoghurt production using yeasts *K*. *marxianus* and *I. orientalis* was to avoid using such yeast species and instead only rely on the inclusion of other yeast species in yoghurt production.

WO01/30172 describes the use of attenuated (at least 80% of the cells are killed) yeast cells (*Kluyveromyces lactis*), which are unable to grow but which deliver significant amount of enzymes, as adjunct culture for the production of cheeses and especially for the shortening of the ripening time and for enhancing the rate and diversity of cheese flavour. The document teaches that the addition of extra amounts of enzymes, either as such or within non-lysed dead or non-viable yeast cells, can be used to enhance the rate of flavour and texture formation in cheeses.

WO01/30171 describes methods for preparing attenuated adjunct cultures using microwave radiation.

US 2003/138523 discloses a process for manufacturing a.o. cheese by adding cell extracts of ripening micro-organisms to a starting material. The addition of combinations of cells extracts of *Kluyveromyces* and *Propionibacterium* is mentioned. US 2003/0138523 is silent on the addition to milk of live microorganisms.

Abd-El-Ghani et al. (1996) Egyptian Journal of Dairy Science, 24: 247-252 discloses the effects of live *Propionibacterium freudenreichii* subsp. *shermanii* on the growth and viability of *K*. *lactis* in yoghurt like products.

Effat et al. (2001) Egyptian Journal of Dairy Science, 29:251-262, discloses using *Propionibacterium* for metabolite production for controlling growth of *K*. *lactis* during the production of cheese.

### GENERAL DEFINITIONS

"Dairy product" refers to milk-based or milk derived food products, such as yoghurt, soft, hard and semi-hard cheeses, butter, quark, buttermilk, etc.

"Dairy base" refers to milk used as a basic ingredient during dairy food production. "Cheese" refers to soft (Camembert, Brie, etc.), hard (Gruyere, Cheddar, Parmesan, etc.) and semi-hard cheeses (Gouda, Edam, Maasdam etc.).

"Cracking" refers to the appearance of cracks in cheeses due to gas formation. "Off-flavour" or "rancidity" or soapy taste refers to undesired tastes and/or odors developed as a result of too much lipolytic activity of a micro-organism.

"Ripening" or "maturation" are used herein interchangeably and, with reference to cheese production methods, refers to the phase wherein the cheese is matured for days, weeks, months or even years (depending on the cheese).

"Micro-organism" refers herein to food grade micro-organisms, having a GRAS status (Generally Recognized As Safe) by the relevant national authority, such as the US Food and Drug Administration and being bacteria or fungi (e.g. yeasts, such as the unicellular yeast *Kluyveromyces lactis*). When referring to "a micro-organism" it is understood that generally a plurality of cells of a certain genus, species or strain are referred to. Food grade micro-organisms is understood to exclude food spoilage organisms and micro-organisms pathogenic to humans.

"Live" or "viable" refers to living micro-organisms, capable of growth under suitable conditions. Attenuated micro-organisms (80% or more of the cells being dead) are not included herein. However, viable frozen or freeze-dried micro-organisms are included. "Growth" or "growth rate" of a micro-organism refers herein to either the multiplication of the cells (as determined by the cell count at one or more time points) and/or to the survival (or survival rate) of the cells (as determined by the cell count at one or more time points). When reference is made to one first micro-organism "controlling the growth of" another second micro-organism it is meant that the first micro-organism (or one or more inhibitory compounds produced by it) is capable of significantly influencing, especially reducing, the growth or growth rate (or survival or survival rate) of the second micro-organism when compared to the growth/survival of the second micro-organism cultured under the same conditions but in the absence of the first micro-organism.

"Significantly influencing" or "significantly reducing" refers to a statistically significant effect, preferably a reduction of at least 2%, 5%, 10%, 15%, 20%, 30%, 40%, 50%, 60%, 70%, 80%, 90% or even 100% more relative to a suitable control. A significant reduction may be determined for one or more characteristics measured or assessed during the production of a dairy product, such as (but not limited to) growth / growth rate of a micro-organism; as survival / survival rate of a micro-organism; one or more textural characteristics, such as gas formation, cracking, eye formation and distribution; development of rancidity or soapy taste; lipolytic activity, etc. Generally standard tests can be used to assess and/or quantify one or more of such characteristics. Such tests may be microbiological tests, molecular tests and/or human visual/tactile/organoleptic tests carried out by e.g. expert panels.

"Starter cultures" are cultures of one ("simple") or more ("mixed" or "compound") food-grade micro-organisms (especially LABs), each in a suitable concentration (optionally highly concentrated), suitable for being used in the production of dairy products. Starter cultures (or other live cultures according to the invention) may be fresh or frozen or freeze-dried (and regenerated). When cultures are frozen or regenerated, the viability after thawing or regeneration preferably result in a viability which is comparable to a fresh culture. Starter cultures are responsible for the acidification, flavour formation and textural properties (solid products like cheese, ed.) or consistency (liquid products like yoghurt, buttermilk ed.) properties of the dairy product.

"Solid dairy products" are herein products which have a ratio of water to protein (water/protein) which is smaller than 10.0. For example quark has a water:protein ratio of about 5.0, Feta of about 3.0; Gouda of about 1.5; and Gruyère of about 1.0. In contrast, yoghurts have a ratio of water to protein of around 16.0. (Walstra, P., Wouters, J.T.M. & Geurts, T.J., 2006. Dairy Science and Technology. 2nd ed. In: CRC Press, Taylor & Francis Group, Boca Raton. pp. 694-701).

"Adjunct cultures" are one or more food grade micro-organisms which are used in dairy products for special features, e.g. flavour diversification or bioconservation. They do not have the primary task of acidifying the milk.

"Fresh cultures" refers herein to freshly grown, live inoculum cultures of one or more micro-organisms.

"Frozen cultures" refers herein to deep frozen live cultures which become viable by defrosting them. Similarly "freeze-dried" cultures are cultures which become viable by reconstitution.

"Defined mixed strain culture" refers to both a physical mixture comprising e.g. at least two micro-organisms or at least two adjunct and/or starter cultures to generate a mixture, i.e. where each component comprises at least one strain and is still separate but will be admixed by either adding one component to the other or adding both at the same time or consecutively to a third component. A "defined mixed strain culture" may, thus, refer to a composition comprising at least two micro-organisms or to two compositions, to be admixed, each comprising at least one micro-organism.

"Direct Vat Inoculation" (DVI) is a starter culture or adjunct culture which is directly used for the inoculation of the milk

"Bulkstarter" is a deep frozen starter culture and used by dairy industry as inoculum for the preparation of a fresh starter culture.

"Pellets" are deep frozen droplets of micro-organisms.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

### DETAILED DESCRIPTION

The invention concerns a method for making a cheese comprising adding at least two live food grade micro-organisms to a milk, wherein said two micro-organisms are at least one yeast strain selected from the genus *Kluyveromyces* and at least one bacterial strain selected from the genus *Propionibacterium,* wherein said bacterial strain controls the growth and/or survival of said yeast strain during the production process of said cheese, and wherein the bacterial strain selected from the genus *Propionibacterium* produces during the production process propionic acid at a level of at least 2 mmol per kg cheese moisture and to a cheese obtainable by this method.

Cheese produced with a live *K*. *lactis* resulted in gas production and textural deficiencies, see Example 1. The present inventors found that this problem could be overcome by using mixtures of at least two species or strains of live, food-grade micro-organisms, wherein one micro-organism has as an inhibitory effect on the growth (and/or survival and/or metabolism) of the second micro-organism so that negative side effects (such as textural deficiencies and/or the development of off-flavours) of second micro-organism are significantly reduced or prevented in the dairy product.

Especially a mixture of at least one yeast and one bacterial strain, which controls the growth of the yeast strain, is suitably used in the production of dairy products according to the invention. When making cheeses, it was found that the addition of both an acid producing bacterium, being *Propionibacterium,* and a flavour producing yeast selected form the genus *Kluyveromyces* strain resulted in good flavour/aroma characteristics (due to the yeast) and significantly enhanced texture characteristics (due to the *Propionibacterium* controlling the growth of the yeast) of the final cheese product (see Example 2). Especially irregular eye formation and distribution could be significantly reduced and the normal "cracking" caused by fast yeast growth and consequently a fast CO₂ production was not found, while the typical fruity flavour resulting from the production of flavour compounds, such as phenyl ethyl alcohol, produced by the yeast was only slightly reduced (without having an effect on the taste of the final product). This finding, that weak acid producing bacteria, being *Propionibacteria,* can influence the growth of live yeasts during cheese production methods without reducing the taste of the end-product enables for the first time a much wider variety of viable yeast strains to be used, especially in the production of semi-hard and hard cheeses and a range of new flavour profiles may be generated by these yeasts in dairy products. In addition or alternatively, controlled growth of the yeast during various ripening stages enables not only a significant reduction (or elimination) of textural deficiencies, but can also be used to significantly reduce lipolytic activity of the yeast and the development of off-flavours. For example, certain yeast strains produce excessive lipase and their uncontrolled growth results in rancidity of the dairy product.

In the instant invention the outgrowth of viable yeast cells is controlled by inhibition by weak acids produced by the *Propionibacterium.* The undissociated weak acids diffuse into the yeast cell and decrease the internal pH. This leads to acidification of the cytosol and inhibition of metabolic pathways (Thomas, Hynes & Ingledew, Applied and Environmental Microbiology, April, 2002, 1616-1623). Holyoak et al. (Applied and Environmental Microbiology, September, 1996, 3158-3164) demonstrated that sorbic acid stimulates the plasma membrane H⁺-ATPase activity of *Saccharomyces cerevisiae.* The synthesis of ATP appeared not to be influenced by the weak acid because oxygen consumption and CO₂ production were not affected significantly. It was suggested that cells cope with weak acid stress by using a larger part of the generated ATP to export the protons instead of biomass formation. These results are in accordance with the study of Quintas, Leyva, Sotoca, Loureiro-Dias & Peinado (International Journal of Food Microbiology, 100, 2005, 125-130) which showed that the maintenance energy of the yeast *Zygosaccharomyces baillii* increased in the presence of benzoic acid. Lind, Jonsson & Schnürer (International Journal of Food Microbiology, 98, 2005, 157-165) studied the inhibition of *K. marxianus* by propionic acid, acetic acid and lactic acid and found that minimal inhibitory concentrations were 60, 80 and > 500 mM, respectively. In cheese lactic acid is the most abundant weak acid with a concentration of around 300 mM. To increase weak acid stress *Propionibacterium freudenrechii* can be used according to the invention to convert lactic acid into propionic acid and acetic acid. Experiments on synthetic media (Example 3) confirm that low levels of propionic acid, such as less than 18.7 mmol/kg already dramatically reduced the growth rate of *K*. *lactis* by at least 20% (≥20% and ≥50%, and ≥70% for 1.9 mmol/kg, 7.5 mmol/kg and 15.0 mmol/kg, respectively) and thereby also reduced gas formation significantly (Example 3).

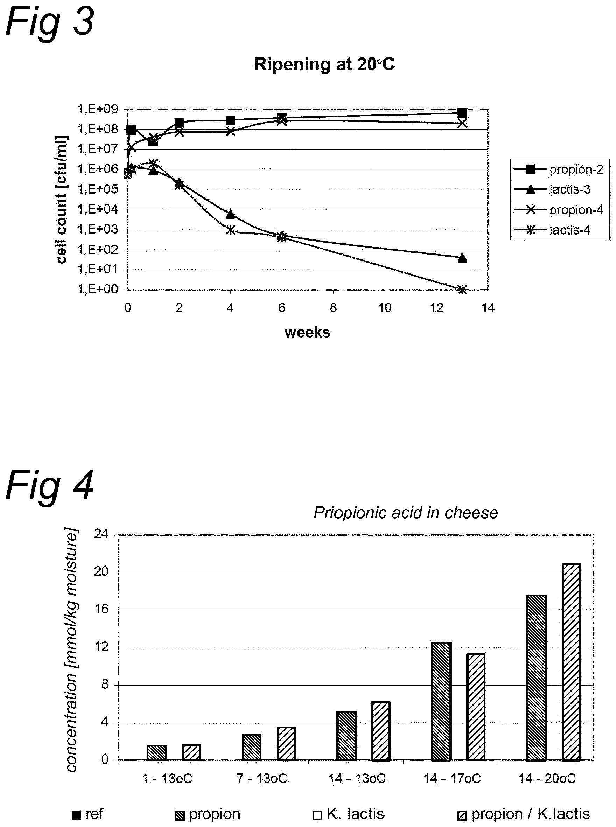

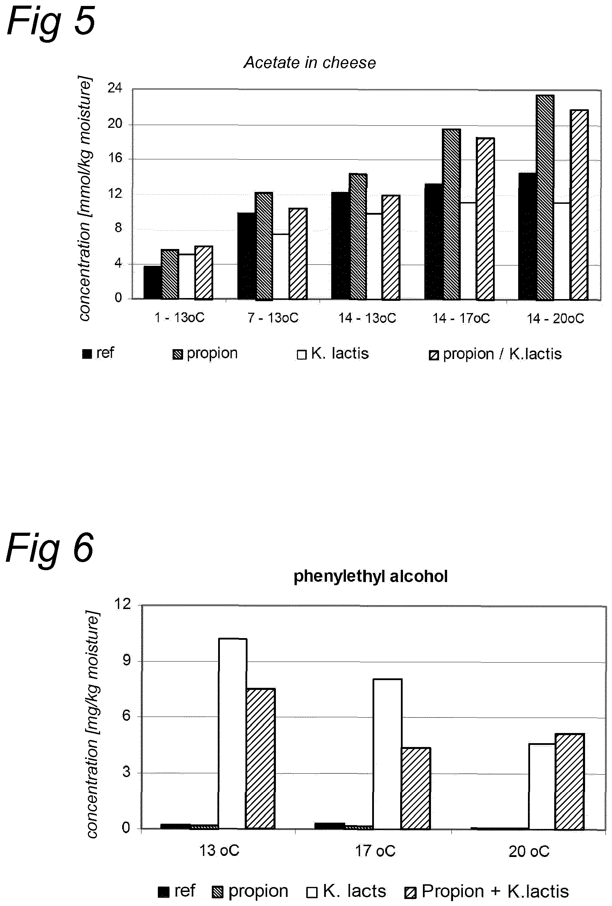

Cheese trials (Example 2) have shown that after one week of cheese ripening at 13 °C propionic acid levels were just below 5 mmol per kg cheese moisture and acetate levels just below 10 mmol per kg cheese moisture in cheese comprising *Propionibacterium* and *K*. *lactis.* After two weeks levels of propionic acid were around 10 mmol per kg cheese moisture and acetate levels were around 15 mmol per kg cheese moisture. At a ripening temperature of 17 °C similar results were found, with levels of propionic acid being around 15 mmol per kg cheese moisture and levels of acetate around 20 mmol per kg cheese moisture after two weeks (see Fig. 4 and 5). The outgrowth of *K*. *lactis* in cheese produced with *Propionibacterium* (propionic acid and acetate) reduce the growth of the yeast strain to such an extent that cell count is reduced sufficiently (e.g. about a 10-fold reduction of yeast cell count in cheese ripened at 13 or 17 °C, especially during the first few weeks of ripening) in order to avoid loss of texture quality (such as the development of cracks and/or irregular eye formation and/or distribution) while at the same time the production of desired flavour compounds by the yeast cells is not reduced significantly (e.g. phenyl ethyl alcohol production is reduced by 50 % or less, such as 40, 30, 20, 10% or less compared to the amounts produced by the yeast cells in the absence of *Propionibacteria*). Importantly, the reduction in beneficial flavour compounds did not reduce the taste of the final product.

*K*. *lactis* strains do generally not have excessive lipolytic activity, so that their controlled growth does not influence the development of off-flavours. However, the bacteria used herein can effectively be combined with yeast species which do have excessive lipolytic activity. One can thereby significantly reduce the development of off-flavours/odors of such yeasts.

By controlling the growth of *Kluyveromyces* (hereafter micro-organisms (a)) (through addition of *Propionibacterium* (hereafter micro-organism b) during the production process of the dairy product, one or more of the following undesired negative properties resulting from organisms (a) can be significantly reduced or prevented:
i) the development of textural deficiencies, such as cracking of solid dairy products (such as cheeses, etc.); and/or (irregular) eye formation and/or distribution;
ii) gas (CO₂) production by micro-organism (a);
iii) the development of off-flavours and/or odors due to outgrowth (uncontrolled growth) of organism (a).

A "significant reduction" refers herein to a reduction of at least about 2, 5, 10, 15, 20, 30,40,50, 60, 70, 80, 90 or 100% compared to the reference dairy product (which is made using organism (a) without the use of micro-organism (b).

"During the production process" does herein not encompass post-production storage properties, such as for example acidification of yoghurt during storage. Also, the growth of the microorganism (a) is preferably not completely prevented, as during the production process growth does take place, but outgrowth (uncontrolled growth) is prevented and controlled by microorganism (b), through fermentation products such as weak acids being produced by (b). Thus, the growth rate of microorganism (a), rather than its growth as such, is controlled.

In a preferred embodiment the yeast strain of the genus *Kluyveromyces* is *K*. *lactis; K*. *marxianus*, preferably *K*. *lactis.* Such strains are available in the art and can be either obtained from deposit institutions or they can be isolated from food products. Examples of food grade yeasts are for example described in Lourens-Hattingh and Viljoen (2002, Food Microbiology 19: 597-604). In a preferred embodiment only one species of microorganism (a) is comprised in the production process, preferably only *K*. *lactis.*

Examples of *Propionibacteria* which may be used are strains of the species *Propionibacterium freudenreichii, Propionibacterium acidipropioni, Propionibacterium arabinosum, Propionibacterium thoenii* and/or *P. jensenii,* and others. Such bacterial strains are available in the art and can be either obtained from deposit institutions or they can be isolated from food products.

The second micro-organism (b) is capable of (significantly) controlling the growth/survival of micro-organism (a) and preferably produces one or more growth-inhibitory compounds, such as weak acids, to control the growth of the first micro-organism under (a) and to prevent its outgrowth and one or more undesired negative properties (see above) which would normally result when using the micro-organisms of (a) in the absence of the second micro-organism (b) in dairy production methods. The micro-organism preferably produces weak acids, such as propionic acid, acetate, and/or free fatty acids.

Obviously, the amount of weak acid produced depends on a large number of factors, such as the strains' species, strains' concentration used for production, production method of dairy product and ripening conditions (temperature etc.). However, routine experimentation can be used to determine whether a micro-organism *Propionibacterium* is suitable for controlling (especially for reducing) the growth of the yeast strain under (a) during dairy production methods. The *Propionibacterium* produces during the production process propionic acid at a level of at least 2 mmol per kg cheese moisture, preferably at least 4 mmol, 10 mmol, 15 mmol or 20 mmol per kg. The micro-oroganism need not produce more than 25 mmol propionic acid per kg cheese moisture, e.g. a production of about 20 mmol or less, is sufficient.

For example, one can compare the cell counts in a dairy product comprising both micro-organisms at various time points (e.g. during cheese ripening, see Examples) to the cell count of a suitable control dairy product, such as a cheese, lacking the micro-organism of (b). If the cell count of the micro-organism under (a) decreases faster or is reduced after a certain period in the presence of the micro-organism under (b) compared to the control culture, then (b) has a significant effect on the growth of (a). For example it was found that during cheese ripening at 13°C or at 17°C, the presence of *Propionibacterium freudenreichii,* had the effect that the cell count of *K*. *lactis* decreased about 5 to 10-fold faster (and cell counts of yeast were 5x to 10x lower) compared to the control cultures lacking *Propionibacterium freudenreichii.* This effect was especially seen during the first weeks of ripening and is responsible for the absence of cracking in the cheeses.

The term "to control the growth of" refers herein to the capability of one micro-organism to reduce the growth / growth rate of another (measured e.g. as cfu/gram or cfu/ml of dairy product over at least two time points) by at least 2% or 5%, preferably by at least 10%, 20%, 30%, 40%, 50% or more, compared to a suitable reference dairy product.

The method comprises adding at least two micro-organism, at least one of (a) and one of (b) to milk, such as the cheese milk. The production process is carried out using known methods. The two micro-organisms may be added together (as or to generate a defined mixed strain culture) or consecutively, within a short time period, such as several minutes or hours. The most suitable concentration of each of the strains may be determined experimentally, depending on the production method which is to be used and the growth characteristics of the micro-organisms. For example in the making of hard and semi-hard cheeses, a mixture of about 6 x 10⁵ cfu per ml milk *K*. *lactis* and 1.5 x 10⁶ cfu per ml milk *Propionibacterium freudenreichii* was found to be suitable. However, other suitable amounts may range from about 1 x 10⁴ cfu/ml to about 1 x 10¹⁰ cfu/ml of each of micro-organism (a) and (b), such as at least about 1 x 10⁵ cfu/ml, 1 x 10⁶ cfu/ml, 1 x 10⁷ cfu/ml, 1 x 10⁸ cfu/ml, 1 x 10⁹ cfu/ml or more. The two micro-organisms may thus be present in ratios of 1 : 100 to 100 : 1, including values in between, e.g. 1 : 1, 2 : 1 or 1 : 2, 1: 5, 5: 1, 1: 10 or 10 : 1, etc.

The mixture of the two micro-organisms may conveniently be added to the dairy base at about the same time as the starter culture. For hard and semi-hard cheeses it may be added to the milk together with a commercial LAB starter culture (comprising e.g. *Lactococci, Lactobacilli , Leuconostoc* and/or *Streptococci*).

The two micro-organisms (a) and (b) can, therefore, conveniently be added to the dairy base at the beginning of the normal (known) production process of the cheese. Thus, other micro-organisms will normally be added also, especially LAB and/or other adjunct cultures (e.g. protective cultures; probiotic cultures), etc. In addition it is feasible to add more complex mixtures of micro-organisms, such as two or more species or strains of (a) and/or of (b).

The basic steps of the method thus comprises:
i) producing or providing an adjunct culture comprising micro-organisms (a) and/or (b); and/or a starter culture comprising micro-organism (a) and/or (b);
ii) adding the adjunct culture(s) and/or starter culture(s) to milk so that a milk is provided which comprises at least organism (a) and (b);
iii) producing a final cheese therefrom using known methods;
iv) optionally processing and/or packaging the cheese further.

Adjunct cultures or starter cultures can be produced using known microbiological methods, whereby the micro-organism(s) is/are grown to a suitable concentration, is optionally harvested (e.g. by centrifugation) and suspended in appropriate medium and is then optionally deep frozen at an appropriate concentration and in an appropriate medium or freeze-dried.

The method is a method for producing cheese, preferably semi-hard or hard cheese, although a method for producing soft cheese is also encompassed herein. The starter culture is often prepared fresh in the dairy plant by using a Bulkstarter. In that case the fresh starter culture and the adjunct culture can be added to the milk at about the same time. The adjunct cultures, comprising strain (a) and/or (b), can be added as two single adjunct cultures or as a mixture containing both strains. Both micro-organisms will thus eventually be comprised within the same composition, even if they are added separately. Preferably, both micro-organisms are present in one adjunct culture which can be used conveniently to add the two micro-organisms during the production process.

In case a DVI (Direct Vat Inoculation) starter culture is used, the starter and adjunct culture can still be used separately at the same time, or a mixture of the starter culture and adjunct culture can be use. Such a mixture of adjunct culture and/or starter culture is also an embodiment of the invention. Preferably it comprises the two micro-organism in suitable amounts to be used directly or in highly concentrated form which are diluted or split into portions prior to use as inoculum. A deep frozen adjunct culture or mixture of adjunct cultures may for example comprise one or more cartons with a weight between 50 to 500 or more grams pellets.

The dairy base comprising both micro-organisms is processed further to make the final cheese, and the further process may include one or more production steps, removal of whey and a maturation stage. The temperature used during maturation may vary, e.g. from 5 °C to 20 °C for semi-hard and hard cheeses. In cheese production, the method is especially suitable at cheese ripening temperatures below about 20°C, as at higher temperatures the yeast strain may show reduced growth and survival and the bacterial strain (*Propionibacterium*) would significantly contribute to flavour and texture development, which is undesirable). In general, the method is particularly useful at temperatures which would otherwise result in uncontrolled growth and/or CO₂ production and/or high lipolytic activity of the yeast strain used (and textural deficiencies and off-flavours and/or odors of the cheese), which may vary for different yeast genera and species or even strains.

The effect of strain (b) on the cell count of strain (a) is preferably determined at one or more time points during the maturation (ripening) stage. This stage may range from days to weeks or months or even years. Preferably the effect is determined during the phase where the yeast strain normally grows significantly if un-inhibited by the bacterium.

In another embodiment cheese made according to the above methods are provided herein, which comprise an organism of (a) and (b). The presence of the micro-organisms can be determined using known methods, such as DNA based methods (PCR, nucleic acid hybridization, etc.) or microbiological methods. For example, specific strains can be distinguished and identified from other strains in this way.

The final cheese can have a fruity flavour, at least equal to or better than the flavour of a suitable reference product, and is free of (or is reduced in) one or more negative side effects of micro-organisms (a), such as textural defects (e.g. cracks), off-flavours, etc. which reduce product quality. The amount of desired flavour compounds (e.g. phenylethylalcohol), acids produced by the bacterium (e.g. propionic acid and acetate) can also be quantified to define the product, see Fig. 4-6. The absence of off-flavours and/or odors can be determined using organoleptic evaluations by expert panels.

The following non-limiting Examples describe the methods and products according to the invention. Unless stated otherwise, the practice of the invention will employ standard conventional methods of molecular biology, virology, microbiology or biochemistry.

### EXAMPLES

### EXAMPLE 1 - texture problems during cheese production using yeast

### 1.1 Method of cheese production

Semi-hard cheese was produced according standard production process with the non gas-producing mesofilic Bulkstarter containing *Lactococcus lactis* subsp. *lactis* and *L. lactis* subsp. *cremoris* (commercially available under Code 61 at CSK Food Enrichment P.O. Box 225 8901 BA Leeuwarden, The Netherlands), either without the yeast strain *K lactis CSK 1407* (0.3 %-v/v fresh inoculation) or with *K. lactis CSK* 1407 as adjunct culture, as described also in Example 2. The influence of gasformation on the cheese texture was evaluated after 6 and 13 weeks of ripening and graded by eye formation, eye distribution and eye shape.

### 1.2 Results

As shown below, cheese produced with a live *K. lactis* was found to lead to gas production and textural defects. Reference cheese produced with the non gas-producing mesofilic Bulkstarter without *K*. *lactis.* The experimental cheese was produced with fresh *K*. *lactis* cells as adjunct culture, resulting in gas formation and textural deficiencies, see Table 1 and 2 below.

The texture of the 6 and 13 week old cheeses was graded by an expert panel, whereby eye formation, eye distribution and eye shape, etc. were evaluated, indicating gas formation. It was found that the reference cheese did not produce any gas. The cheese produced with the live *K. lactis* had textural defects at both sampling times.

**Table 1**

| 6 weeks | reference | live *K. lactis* 0.3% |
|---|---|---|
| eye formation | 0 | 2.0 |
| irregular eye distribution | 0 | 0.4 |
| irregular eye shape | 0 | 0.6 |
| many small eyes | 0 | 0 |
| open texture | 0 | 0 |

| | | |
|---|---|---|
| score from 0 - 4; 0 = none (=good), 4 = a lot (=bad) | | |

**Table 2**

| 13 weeks | reference | live *K. lactis* 0.3% |
|---|---|---|
| eye formation | 0.4 | 3.2 |
| irregular eye distribution | 0 | 0 |
| irregular eye shape | 0 | 1.1 |
| many small eyes | 0 | 0 |
| open texture | 0 | 0 |

The activity of *K*. *lactis* was also reflected in the viable cell count. Viable cell count was carried out using standard procedure. Cells are extracted from the cheese by disolving 5 gram of cheese in 45 gram of 2 w/v-% sodium citrate and Stomachered for 5 minutes at 45 °C. The yeast cell count is determined on OGY agar (Oxytetracyclin Glucose Yeast) 5 days at 25 °C. Cell counts of *K*. *lactis* in the cheese milk and of 24 hours and 14 weeks old cheese are given in Table 3. It was found that cell count of *K*. *lactis* increases 10-fold from cheese milk to 24 hours old cheese which is partly due by the concentration of the cells in the curd.

**Table 3**

| cell count yeast *10⁵ cfu/ml or cfu/gr | reference | live *K. lactis* 0.3% |
|---|---|---|
| cheese milk | <10 | 4.9 |
| 24 hour old cheese | <10 | 46 |
| 14 days in cheese | <10 | 47 |

### EXAMPLE 2 - Controlled growth of yeast during cheese production

### 2.1. Material and Methods

Semi-hard cheeses (1.500 liter cheese milk) were produced with the commercial mesofilic L-starter containing *Lactococcus lactis* and *L. cremoris* and *Leuconostoc* sp. (commercially available under Code 19 at CSK Food Enrichment P.O. Box 225 8901 BA Leeuwarden, The Netherlands. The reference, vat 1, is inoculated with only the freshly prepared Bulkstarter, other vats are produced with the Bulkstarter and *Propionibacterium freudenreichii* (commercially available under Code 08 from CSK Food Enrichment P.O. Box 225 8901 BA Leeuwarden, The Netherlands) and the yeast strain *Kluyveromyces lactis CSK 1407,* see Table 4.

**Table 4 - inoculum for cheese milk**

| Vat | reference | 2 | 3 | 4 |
|---|---|---|---|---|
| Bulkstarter | 0.7 % | 0.5 % | 0.5 % | 0.5 % |
| ***K. lactis*** | - | - | 6.1*10⁵ cfu/ml | 6.1*10⁵ cfu/ml |
| *Propionibacterium* | - | 1.5*10⁶ cfu/ml | - | 1.5*10⁶ cfu/ml |

| | | | | |
|---|---|---|---|---|
| Cfu = colony forming units, cfu/ml = cfu per ml cheesemilk | | | | |

The cheeses were ripened the first 6 weeks at 13 °C, 17°C or 20 °C and from weeks 6 to 13 at 13°C. Cell counts of *K. lactis* and *Propionibacterium* were performed on frozen cheese samples taken at 1, 2, 4, 6 and 13 weeks of ripening. The *K. lactis* and *Propionibacterium* cell count is determined on OGY agar (Oxytetracyclin Glucose Yeast) 5 days at 25 °C and LA (Lactate Agar, 7 days anaerobically at 30 °C), respectively. Phenylethylalcohol, propionic acid and acetate were determined at various stages during ripening.

### 2. 2 Results

### 2.2.1 Cheese production data

Production data are shown in Table 5. The pH decrease in all four cheeses was comparable. The vitality of the *K. lactis* is not reflected in the pH decrease because it does not produce acids. The pH decrease is the result of the conversion of lactose to lactate by the LABs of the Bulkstarter.

No remarkable differences between the vats was found and the chemical composition of the four cheeses was comparable.

**Table 5 - cheese production data**

| **cheese vat** | **vat 1** | **vat** 2 | **vat 3** | **vat** 4 |
|---|---|---|---|---|
| Bulkstarter | 0.7 % C19 | 0.5 % C19 | 0.5 % C19 | 0.5 % C19 |
| Adjunct-culture | - | *Propionibacterium* | *K. lactis* | ***Propionibacterium* + *K. lactis*** |
| pH after 4 hrs | 6,06 | 6,01 | 6,02 | 6,01 |
| pH after 5.5 hrs | 5,77 | 5,71 | 5,67 | 5,60 |
| pH after 6 hrs | 5,64 | 5,60 | | 5,47 |
| pH after 6.5 hrs | 5,53 | 5,45 | 5,42 | |
| pH of the cheese after 24 hrs | 5,26 | 5,21 | 5,27 | 5,25 |
| Composition after 14 days: | | | | |
| Moisture content % | 41,8 | 42,4 | 41,6 | 42,1 |
| Fat content in dry matter % | 51,0 | 51,0 | 51,1 | 50,8 |
| Salt content in dry matter % | 3,29 | 3,31 | 3,03 | 3,40 |
| pH | 5,27 | 5,25 | 5,30 | 5,28 |

### 2.2.2 Cell counts of K. lactis and Propionibacterium during cheese ripening

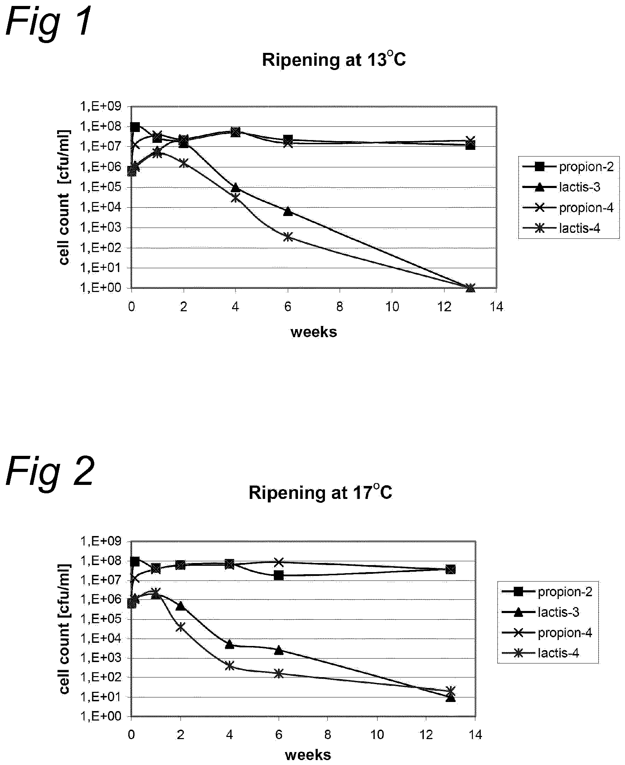

The cell count development of *Propionibacterium* and *K. lactis* are given in Figures 1 to 3. Figure 1 shows the cell count at 13 °C ripening temperature (the number after the species name indicates the vat). The cheese milk was inoculated with 1.5 x 10⁶ cfu of *Propionibacterium* per ml. Assuming that all the cells are incorporated in the curd a cell count of 1.5 x 10⁷ cfu/gr per cheese is expected at the start of the ripening. The *Propionibacterium* cell count with and without *K*. *lactis* shows a stable level of 2 to 7 x 10⁷ cfu per gram cheese. The minimal growth of *Propionibacterium* is expected due to the low ripening temperature of 13 °C. After more then 2 weeks of ripening the cell count of *K*. *lactis* decreased. In the presence of *Propionibacterium* (lactis-4) the decrease of *K. lactis* cell count was found to be around 10-fold faster compared to the absence of *Propionibacterium* (lactis-3) and the decrease started at least about one week earlier.

This Example shows that *Propionibacterium* controls the growth of the yeast *K*. *lactis* and is capable of reducing the yeast cell count / growth rate by a factor 10 at a ripening temperature of 13 °C and leads to a decrease of *K*. *lactis* cell count at an earlier moment in ripening.

Figure 2 shows the cell count at 17 °C ripening temperature (the number after the species name indicates the vat). The *Propionibacterium* cell count in cheese ripened at 17 °C shows a similar trend as when ripened at 13 °C, see Figure 2. Also the effect of *Propionibacterium* on the cell count of *K*. *lactis* at 17 °C is comparable with that found at 13 °C ripening temperature above.

Figure 3 shows the cell count at 20 °C ripening temperature (the number after the species name indicates the vat). The *Propionibacterium* cell count of the cheese ripened at 20 °C increased during the first weeks to around 5 x 10⁸ cfu/gr. This 5- to 10-fold growth was not seen at a ripening temperature of 13 or 17 °C. The cell count of *K*. *lactis* was relatively low, both with and without *Propionibacterium,* with a maximum of around 1 x 10⁶ cfu per gram cheese.

This Example shows that the effect of *Propionibacterium* on the yeast growth is especially effective when ripening temperatures and conditions used are such that the yeast strain has a relatively good survival under the conditions used. When cheese was ripened at 20 °C, no outgrowth of the *K*. *lactis* strain used herein occurred and consequently no significant impact of *Propionibacterium* on *K*. *lactis* was therefore observed.

### 2.2.3 Propionic acid concentration in cheese

Fat and free fatty acids are extracted from the cheese samples and are isolated with capilar colum. The propionic acid concentration was determined using Gas Chromatography (GC).

Figure 4 shows the propionic acid concentration after 1, 7 and 14 days of ripening in the different cheeses, expressed as mmol per kg cheese moisture.

The propionic acid concentration increased during the ripening and is higher when the cheeses are ripened at evaluated temperatures. No influence of *K*. *lactis* was found on the propionic acid production of *Propionibacterium.*

Propionic acid was produced in the vats with *Priopionibacteria,* although the concentrations which were found were much lower than the spoilage micro-organism-inhibiting concentrations described in the literature (Lind et al., 2005. International Journal of Food Microbiology 98, 175-165). Therefore the minimal inhibitory level of propionic acid for controlling yeast growth in cheese appears to be below 20mM or below 10mM after two weeks or one week ripening (respectively) at temperatures below 20°C (see Fig. 4).

### 2.2.4 Acetate concentration in cheese

Fat and free fatty acids are extracted from the cheese samples and are isolated with capilar colum. Acetate concentration was determined using Gas Chromatography (GC).

Figure 5 shows the amount of actetate produced in mmol per kg cheese moisture. The amount was found to be below 20mM after 2 and 1 week of ripening at temperature below 20°C (see Fig. 5).

### 2.2.5 Production of Phenyl ethyl alcohol in cheeses

The phenyl ethyl aclohol concentration was determined using Purge&Trap - Thermal Desorption-Gas Chromatographic- Mass Spectronomy (PT-TD-GC-MS). Cheese samples are disolved in water with the Stomacher, volatiles are released by extraction with Helium of 42 °C and are captured on Tenax column. The captured volatiles are subsequently desorbated at high temperatures, separated with a capillary colom and identified and quantified with mass spectronomy.

Figure 6 shows the amount of the flavour compound phenyl ethyl alcohol produced by the yeast and expressed as mg per kg in the cheese moisture.

In Figure 6 the phenyl ethyl alcohol concentration in 13 week old cheese ripened at 13, 17 and 20 °C is given. As expected, no phenyl ethyl alcohol is found in the cheeses produced without *K*. *lactis.* Further is show in Figure 6 that higher ripening temperatures results in a lower phenyl ethyl alcohol concentration. The phenyl ethyl alcohol concentration in the cheese with *Propionibacterium* ripened at 13 and 17 °C was around 25 and 50 % lower compared with the cheeses ripen at 20 °C, respectively. The influence of the ripening temperature on the phenyl ethyl alcohol concentration is comparable with the effect on cell count development.

The reduction of phenyl ethyl alcohol due to the presence of *Propionibacterium* did not significantly reduce the flavour of the cheeses ripened at 13 or 17°C, as shown herein below.

### 2.2.6 Oragnoleptic evaluation of the cheeses

The cheese matured at 13 °C was organoleptic evaluated by an expert panel after 13 weeks of ripening. A fruity and yeasty flavour was found in the cheeses produced with *K*. *lactis* alone and *K*. *lactis* and *Propionibacterium* ripened at 13 or 17 °C. The aroma profile of the cheeses ripened at 13 and 17°C was not influenced by *Propionibacterium.* Only at 20 °C *Propionibacterium* had an impact of the flavour.

### 2.2.7 Texture evaluation of the cheese

The cheeses made with only *K*. *lactis* have significant textural deficiencies, while the cheeses made with *K*. *lactis* and *Propionibacterium* ripened at 13 and 17°C have good textural characteristics (no cracking).

### Example 3 - Propionic acid reduces the growth rate and gas production rate of K. lactis.

### 3.1 Materials and methods

The effect of propionic acid (0, 1.9, 7.5, 15 and 30 mmol/kg medium) on the growth rate of *K*. *lactis* CSK 1407 was determined in M17 (Oxoid) with 3 % glucose. After addition of sodium propionate (BDH, England) the pH of M17 was adjusted to 5.2 with 5 M HCl. The medium was inoculated with 1.5*10⁶ cfu mL⁻¹ *K*. *lactis* cells and incubated at 30 °C. The culture was kept homogenous by stirring (100 rpm). The growth was followed by measuring the optical density (OD₆₀₀) in quadruple during the incubation. The maximum growth rate (µ, expressed as h⁻¹) of *K*. *lactis* was calculated (µ = ln(ODₜ₌ₜ/ODₜ₌₀)/Δt) during the exponential growth phase under the said different propionic acid concentrations. The effect of propionic acid (0, 1.9, 7.5 and 15 mmol/kg medium) on the gas production rate (r_{S,gas}) by *K*. *lactis* was determined in Nilac (Nizo food research, The Netherlands) milk. Bottles (270 mL) were filled with 200 mL Nilac milk after the addition of sodium propionate (BDH, England) the pH was adjusted to 5.4 with 4 M lactic acid (Boom, The Netherlands). Gas production was followed by measuring the pressure development (P, expressed as N m-²) in the headspace with Oxitop OC110 system (WTW, Germany) during incubation at 13 °C. The maximum gas production rate was calculated as r_{S,gas} = ΔP/At and expressed as N m⁻² h⁻¹.

### 3.2 Results

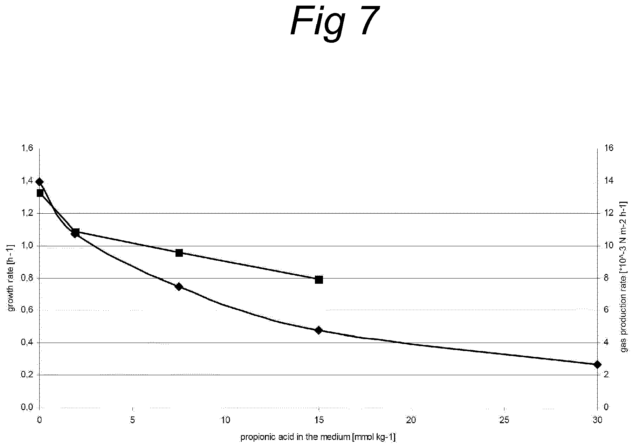

Figure 7 shows the influence of propionic acid on the growth rate [1/h] (◆) of *K*. *lactis* grown in M17 + 3% glucose (pH 5.2) at 30 °C and on the gas production rate [10⁻³ N m⁻² h⁻¹] (▪) development by *K*. *lactis* in Nilac milk at 13 °C.

The influence of propionic acid on the growth rate of *K*. *lactis* was studied in synthetic media under low oxygen tension. It was found that under optimal conditions, so without inhibition by propionic acid *K .lactis* had growth rate of 1.4 h⁻¹. In the presence of 1.9 mM and 7.5 mmol kg⁻¹ propionic acid the growth decreased with 21 and 50 % to a growth rate of 1.1 and 0.7 h⁻¹, respectively (Fig. 7). A further reduction of the growth rate to 0.3 h⁻¹ is found at a concentration of 30 mmol kg⁻¹.

The impact of propionic acid on the gas production rate was studied in milk incubations at 13 °C, which is a normal ripening temperature for semi-hard cheese. Without propionic acid the gas production rate is 13*10⁻³ N m⁻² h⁻¹. In the presence of 1.9 mmol kg⁻¹ and 15 mmol kg⁻¹ propionic acid the gas production rate decreases with 15 and 39 % to 11*10² and 8*10² N m⁻² h⁻¹, respectively (Fig. 7).

The results show that both the growth rate and gas production rate decreases dramatically already at low propionic acid concentrations under conditions comparable to ripening.

## Claims

1. A method for making a cheese comprising adding at least two live food grade micro-organisms to a milk, wherein said two micro-organisms are at least one yeast strain selected from the genus *Kluyveromyces* and at least one bacterial strain selected from the genus *Propionibacterium,* wherein said bacterial strain controls the growth and/or survival of said yeast strain during the production process of said cheese, and wherein the bacterial strain selected from the genus *Propionibacterium* produces during the production process propionic acid at a level of at least 2 mmol per kg cheese moisture.

2. The method according to claim 1 wherein said yeast strain belongs to the species *Kluyveromyces lactis.*

3. The method according to any one of claims 1 or 2, wherein said bacterial strain belongs to the species *Propionibacterium freudenreichii.*

4. The method according to any one of the preceding claims, wherein not more than one yeast species is added.

5. The method according to any one of the preceding claims, wherein the ratio of said two micro-organisms is equal to or between 100 : 1 to 1 : 100.

6. The method according any one of the preceding claims, wherein each of said micro-organisms is added in an amount equal to or between 1x10⁴ to 1x10¹⁰ cfu/ml.

7. The method according to any one of the preceding claims wherein the bacterial strain selected from the genus *Propionibacterium* produces during the production process propionic acid at a level of at least 10 mmol per kg cheese moisture.

8. A cheese obtainable according to any one of the preceding claims.

## Patentansprüche

1. Verfahren zur Herstellung von Käse, bei dem man mindestens zwei lebende, für Nahrungsmittel geeignete (food grade) Mikroorganismen zu einer Milch gibt, wobei es sich bei den beiden Mikroorganismen um mindestens einen Hefestamm ausgewählt aus der Gattung *Kluyveromyces* und mindestens einen Bakterienstamm ausgewählt aus der Gattung *Propionibacterium handelt,* wobei der Bakterienstamm das Wachstum und/oder das Überleben des Hefestamms während des Herstellungsprozesses des Käses kontrolliert, und wobei der aus der Gattung *Propionibacterium* ausgewählte Bakterienstamm während des Herstellungsprozesses Propionsäure in einer Menge von mindestens 2 mmol pro kg Käsefeuchte erzeugt.

2. Verfahren gemäß Anspruch 1, wobei der Hefestamm zur Spezies *Kluyveromyces lactis* gehört.

3. Verfahren gemäß einem der Ansprüche 1 oder 2, wobei der Bakterienstamm zur Spezies *Propionibacterium freudenreichii* gehört.

4. Verfahren gemäß einem der vorhergehenden Ansprüche, wobei nicht mehr als eine Hefe-Spezies zugegeben wird.

5. Verfahren gemäß einem der vorhergehenden Ansprüche, wobei das Verhältnis der beiden Mikroorganismen zwischen 100:1 und 1:100 liegt oder diesen entspricht.

6. Verfahren gemäß einem der vorhergehenden Ansprüche, wobei jeder der Mikroorganismen in einer Menge zugegeben wird, die zwischen 1x10⁴ und 1x10¹⁰ cfu/ml liegt oder diesen entspricht.

7. Verfahren gemäß einem der vorhergehenden Ansprüche, wobei der aus der Gattung *Propionibacterium* ausgewählte Bakterienstamm während des Herstellungsprozesses Propionsäure in einer Menge von mindestens 10 mmol pro kg Käsefeuchte erzeugt.

8. Käse, der nach einem der vorhergehenden Ansprüche erhältlich ist.

## Revendications

1. Méthode pour fabriquer un fromage comprenant l'ajout d'au moins deux microorganismes vivants de qualité alimentaire à un lait, dans lequel lesdits deux microorganismes sont au moins une souche de levure choisie parmi le genre *Kluyveromyces* et au moins une souche bactérienne choisie parmi le genre *Propionibacterium,* dans laquelle ladite souche bactérienne commande la croissance et/ou la survie de ladite souche de levure pendant le processus de production dudit fromage, et dans laquelle la souche bactérienne choisie parmi le genre *Propionibacterium* produit pendant le processus de production de l'acide propionique à un niveau d'au moins 2 mmol par kg d'humidité de fromage.

2. Méthode selon la revendication 1, dans laquelle ladite souche de levure appartient à l'espèce *Kluyveromyces lactis.*

3. Méthode selon l'une quelconque des revendications 1 ou 2, dans laquelle ladite souche bactérienne appartient à l'espèce *Propionibacterium freudenreichii.*

4. Méthode selon l'une quelconque des revendications précédentes, dans laquelle pas plus d'une espèce de levure est ajoutée.

5. Méthode selon l'une quelconque des revendications précédentes, dans laquelle le rapport desdits deux microorganismes est égal ou compris entre 100:1 et 1:100.

6. Méthode selon l'une quelconque des revendications précédentes, dans laquelle chacun desdits microorganismes est ajouté selon une quantité égale ou comprise entre 1x10⁴ et 1x10¹⁰ cfu/ml.

7. Méthode selon l'une quelconque des revendications précédentes dans laquelle la souche bactérienne choisie parmi le genre *Propionibacterium* produit au cours du processus de production de l'acide propionique à un niveau d'au moins 10 mmol par kg d'humidité de fromage.

8. Fromage pouvant être obtenu selon l'une quelconque des revendications précédentes.
